# EUROPÄISCHE PATENTSCHRIFT

(11) **EP 1 848 604 B1**
(45) Veröffentlichungstag und Bekanntmachung des Hinweises auf die Patenterteilung: **03.07.2013**
(21) Anmeldenummer: 06722487.3
(22) Anmeldetag: 15.02.2006
(51) Int. Cl.: B60J 7/00, B60J 7/02

(54) **VERDUNKELUNGSVORRICHTUNG MIT HANDBETÄTIGTEM UND MEHRERE POSITIONEN EINNEHMENDEM AUFROLLBAREM VORHANG**
SHADING DEVICE COMPRISING A ROLLER BLIND THAT CAN BE MANUALLY ACTUATED AND ASSUME SEVERAL POSITIONS
DISPOSITIF D'OCCULTATION COMPORTANT UN RIDEAU ENROULABLE À COMMANDE MANUELLE POUVANT ÊTRE PLACÉ DANS PLUSIEURS POSITIONS

(30) Priorität: 16.02.2005 FR 0501540
(43) Veröffentlichungstag der Anmeldung: 31.10.2007
(73) Patentinhaber: Webasto SE, 82131 Stockdorf (DE)
(72) Erfinder: ALBERT, Jean-Paul C/O Omnipat, 13100 Aix-en-Provence (FR)
(74) Vertreter: Grünberg, Thomas
(86) Internationale Anmeldenummer: PCT/DE2006/000273
(87) Internationale Veröffentlichungsnummer: WO 2006/086965

(56) Entgegenhaltungen:
- DE-A1- 2 234 852
- DE-A1- 3 044 282
- DE-U1-202004 007 359
- DE-U1-202004 011 525
- GB-A- 811 080
- US-A- 3 558 183
- PATENT ABSTRACTS OF JAPAN Bd. 008, Nr. 140 (M-305), 29. Juni 1984 (1984-06-29) -& JP 59 038126 A (TOYO KOGYO KK), 1. März 1984 (1984-03-01)

## Beschreibung

Die vorliegende Erfindung betrifft eine Vorrichtung zur mindestens teilweisen Abdeckung einer lichtdurchlässigen Scheibe mittels mindestens eines Vorhangs mit Aufrollvorrichtung, welcher von Hand betätigt wird und über eine unendliche Vielzahl von Ausfahrpositionen verfügt.

Die Erfindung findet eine besonders vorteilhafte, jedoch nicht ausschließliche Anwendung auf dem Gebiet der Kraftfahrzeuge.

Heute werden immer mehr Dächer von Kraftfahrzeugen mit lichtdurchlässigen, d.h. transparenten oder durchscheinenden Scheiben, ausgestattet. Es handelt sich im Allgemeinen entweder um ein Schiebedachsystem, dessen bewegliche Scheibe aus Glas ausgeführt wird, oder um eine feste Scheibe aus Glas, die direkt einen mehr oder weniger großen Teil des Dachhimmels bildet.

Unabhängig von der jeweiligen Ausführungsform wird in der Praxis diese Art von mehr oder weniger transparenter Scheibe systematisch in Kombination mit einer Lichtabdunkelung verwendet, welche geeignet ist, parallel zur Innenfläche der Glasscheibe ausgefahren zu werden. Die Aufgabe einer solchen Vorrichtung ist es, zu verhindern, dass die Lichtstrahlen, die durch die Glasscheibe eindringen, sich im Inneren des Fahrzeuges verbreiten. Ziel ist dabei natürlich, den Treibhauseffekt im Inneren des Kraftfahrzeuges insbesondere an Tagen mit starker Sonneneinstrahlung zu begrenzen.

Zu den nach dem Stand der Technik an sich bekannten Verdunkelungsvorrichtungen gehören die Vorrichtungen, die ihre Funktion dank des Einsatzes eines Vorhangs mit Aufrollvorrichtung erfüllen. Schematisch wird eine mehr oder weniger lichtdurchlässige Leinwand für die Verschiebung relativ zu einem abzudunkelnden Bereich zwischen einer Aufnahmeposition und einer ausgefahrenen Position beweglich montiert. Genauer gesagt werden die beiden entgegengesetzten Enden der Leinwand jeweils mit einem von dem abzudunkelnden Bereich beabstandet angeordneten, für die Axialrotation beweglich montierten Aufrollrohr und mit einer für das Gleiten zwischen zwei beiderseits des genannten abzudunkelnden Bereiches angeordneten Führungsschienen beweglich montierten Zugstange fest verbunden. Das Ganze ist in der Weise ausgestaltet, dass die Leinwand in der Aufnahmeposition um das Aufrollrohr aufgerollt wird und dass sich die genannte Leinwand in der ausgefahrenen Position unterhalb des genannten abzudunkelnden Bereiches erstreckt.

Bei einer Verdunkelungsvorrichtung mit von Hand betätigtem aufrollbarem Vorhang wird das Aufrollrohr im Allgemeinen nicht vollständig frei für axiale Rotation montiert, sondern wird mit einer Torsionsfeder gekoppelt, die es in permanenter Weise in der Richtung des Aufrollens der Leinwand beaufschlagt. Ziel dabei ist, die Leinwand zwischen der Zugstange und dem Aufrollrohr in Längsrichtung zu spannen, wenn die genannte Leinwand ausgefahren wird.

Diese Art der Ausgestaltung hat jedoch den Nachteil, nur dann zu funktionieren, wenn die Zugstange vollständig blockiert wird. Da die Leinwand ständig in der Aufrollrichtung beaufschlagt wird, ist es in der Tat unerlässlich, dass die Zugstange eingehängt wird, um die Umsetzung der Verdunkelungsfunktion effektiver zu gestalten. Nun ist in der Praxis außer der Aufnahmeposition eine einzige Verwendungsposition nutzbar, nämlich die ausgefahrene Position. Schlussendlich bedeutet dies, dass diese Alles-oder-nichts-Funktion bewirkt, dass eine solche Verdunkelungsvorrichtung nicht sehr praktisch ist.

Um dieser Schwierigkeit abzuhelfen, ist es an sich bekannt, eine Zugstange, deren Enden mit überstehenden Verankerungselementen versehen sind, in Kombination mit Führungsschienen zu verwenden, an denen in Längsrichtung Reihen von Einraststufen oder Einrastbohrungen angebracht sind. Das Ganze ist in der Weise ausgestaltet, dass jedes überstehende Element in der Lage ist, sich beliebig in sämtlichen Einraststufen ein- und derselben Führungsschiene abhängig von der ausgefahrenen Länge der Leinwand zu verankern; die Position jeder Einraststufe entspricht somit einem bestimmten Grad des Ausfahrens der genannten Leinwand.

Diese Art von von Hand betätigter Verdunkelungsvorrichtung weist jedoch den Nachteil auf, in der Umsetzung relativ kompliziert zu sein, da die wirksame Verriegelung der Zugstange nicht bei jedem Bedienvorgang jeweils garantiert werden kann. Das Eingreifen jedes überstehenden Verankerungselements in die entsprechende Einraststufe muss in der Tat blind erfolgen, was den Benutzer unvermeidlicherweise dazu zwingt, tastend vorzugehen, was entsprechende Nachteile mit sich bringt.

Eine solche Verdunkelungsvorrichtung erweist sich im Übrigen sowohl bei der Verriegelung als auch bei der Entriegelung der Zugstange als besonders laut. Insofern ist anzumerken, dass die Geräuschbelästigungen sowohl bei der eigentlichen Verankerungsphase als auch bei der Phase des Tastens entstehen.

Schließlich sind die Möglichkeiten des Ausfahrens der Leinwand, wenn sie auch zahlreich sind, gleichwohl durch Anzahl und Positionierung der verschiedenen längs der Führungsschienen angebrachten Einraststufen begrenzt.

Aus der Druckschrift DE 20 2004 011 525 U1 ist eine Verdunkelungsvorrichtung mit den Merkmalen des Oberbegriffs des Patentanspruchs 1 bekannt. Diese Verdunkelungsvorrichtung umfasst eine Rollobahn, die an einer Wickelwelle gelagert ist und an ihrem freien Ende eine Zugstange aufweist, die mit ihren seitlichen Enden jeweils über ein Gleitelement in Führungsschienen geführt ist.

Entsprechend ist die durch den Gegenstand der vorliegenden Erfindung zu lösende technische Aufgabe, eine Verdunkelungsvorrichtung vorzuschlagen, die eine Leinwand aufweist, deren beide entgegengesetzten Enden jeweils einerseits mit einem von einem abzudunkelnden Bereich beabstandet angeordneten, für die Axialrotation beweglich montierten Aufrollrohr und andererseits mit einer Zugstange, deren Enden für das Gleiten jeweils längs der beiden beiderseits des abzudunkelnden Bereiches angeordneten Führungsschienen beweglich montiert sind, fest verbunden sind, wobei jedes Aufrollrohr mit einem elastischen Rückholmittel gekoppelt ist, das es in der Axialrotation in der Aufrollrichtung der Leinwand, mit der es fest verbunden ist, mitnimmt, wobei eine solche Verdunkelungsvorrichtung es ermöglichen würde, die Probleme nach dem Stand der Technik zu vermeiden, indem sie insbesondere eine beträchtlich verbesserte Bedienerfreundlichkeit bietet und gleichzeitig bei der Betätigung signfikant leiser ist.

Die Lösung der gestellten technischen Aufgabe besteht erfindungsgemäß darin, dass jedes Ende der Zugstange, eine Reibkufe aufweist, die geeignet ist, sich gegen eine Reibungsfläche der entsprechenden Führungsschiene abzustützten, dass jede Zugstange für die Axialrotation relativ zu den

Führungsschienen zwischen einer Verriegelungsposition, bei der jede ihrer Reibkufen sich gegen die mit ihr verbundene Reibungsfläche abstützt, und einer Verschiebeposition, bei der jede ihrer Reibkufen von der Reibungsfläche beabstandet positioniert ist, die mit ihr verbunden ist, beweglich montiert ist, und dass jedes Ende der Zugstange außerdem ein elastisches Rückholmittel aufweist, das in der Lage ist, sie in der Axialrotation bis zur Verriegelungsposition mitzunehmen, wobei das Anlegen der Reibkufen jeder Zugstange an die damit verbundenen Reibungsflächen die Gleitbeweglichkeit der genannten Zugstange längs der Führungsschienen zu blockieren vermag.

Das für das Blockieren jeder Zugstange in einer beliebigen Position herangezogene Prinzip besteht darin, einen hohen Reibungskoeffizienten zwischen ihren Enden und den Führungsschienen zu schaffen. Dies wird unter der Einwirkung der elastischen Rückholmittel durch das Anlegen der Reibkufen an den mit ihnen verbundenen Reibungsflächen erreicht.

Die so definierte Erfindung hat den ersten Vorteil, in der Anwendung extrem einfach zu sein. Das Entriegeln jeder Zugstange erfolgt in der Tat dadurch, dass letztere axial gedreht wird, während ihre Verriegelung unter der Einwirkung der elastischen Rückholmittel automatisch dann erfolgt, wenn keinerlei Drehmoment mehr an der genannten Zugstange angelegt wird.

Ein weiterer wesentlicher Vorteil der Erfindung liegt in der Möglichkeit, jede Zugstange in stufenloser Weise verriegeln zu können, d.h. unabhängig von ihrer Position längs der Führungsschienen und unabhängig von der ausgefahrenen Länge der Leinwand. Damit steht eine unendliche Vielzahl von Ausfahrpositionen zur Verfügung, was bedeutet, dass eine erfindungsgemäße Verdunkelungsvorrichtung tatsächlich als ein eine Vielzahl von Positionen bietendes System zu betrachten ist.

Des Weiteren hat die Erfindung den Vorteil, ein besonders diskretes Geräuschverhalten zu bieten, da das Blockieren jeder Zugstange dadurch erhalten wird, dass lediglich Blockierungen durch Reibung eingesetzt werden.

Die vorliegende Erfindung betrifft auch die Merkmale, welche sich aus der folgenden Beschreibung ergeben und welche einzeln in allen möglichen technischen Kombinationen zu berücksichtigen sind.

Diese als nicht einschränkendes Beispiel gegebene Beschreibung macht besser verständlich, aus was die Erfindung besteht und wie sie realisiert werden kann. Sie wird im Übrigen unter Bezugnahme auf die beigefügten Zeichnungen gegeben, in denen
Fig. 1 eine perspektivische Ansicht von oben einer erfindungsgemäßen Verdunkelungsvorrichtung mit doppeltem Vorhang mit Aufrollvorrichtungen ist;
Fig. 2 den Verbindungsbereich zwischen den beiden Vorhängen mit Aufrollvorrichtungen der Verdunkelungsvorrichtung nach Fig. 1 in detaillierter Form zeigt;
Fig. 3 den Verbindungsbereich in einer Ansicht von oben zeigt;
Fig. 4 den Verbindungsbereich in einer Seitenansicht zeigt;
Fig. 5 den Verbindungsbereich im Längsschnitt auf der Höhe einer der Führungsschienen zeigt;
Fig. 6 eine Ansicht des Verbindungsbereiches im Querschnitt auf der Höhe einer Reibkufe ist;
Fig. 7 eine Seitenansicht mit der Darstellung der Kopplung zwischen den Vorhängen mit Aufrollvorrichtungen der Verdunkelungsvorrichtung ist ;
Fig. 8 eine perspektivische Ansicht der Einheit nach Fig. 7 von oben gesehen bildet.

Aus Gründen der Klarheit werden die jeweils gleichen Bestandteile mit identischen Bezugszeichen bezeichnet. Des Weiteren werden lediglich die für das Verständnis der Erfindung wesentlichen Bestandteile dargestellt, wobei dies auch nicht maßstabsgerecht und nur in schematischer Form erfolgte.

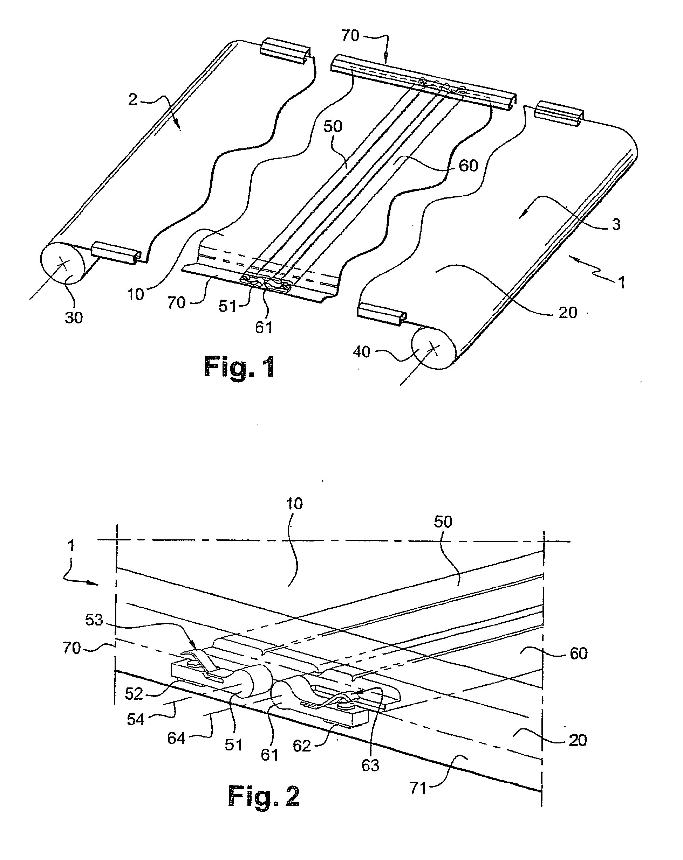

Die Figuren 1 bis 8 zeigen eine Verdunkelungsvorrichtung 1, die dazu bestimmt ist, im Innenraum des Fahrgastraums eines Kraftfahrzeuges mit dem Ziel fest montiert zu werden, das Licht abzudunkeln, das möglicherweise eine feste Glasscheibe durchdringt, die im oberen Teil der Karosserie das Fahrzeugdach bildet. Es ist anzumerken, dass der abzudunkelnde Bereich hier durch den wirklich lichtdurchlässigen Teil der Glasscheibe gebildet wird, d.h. also denjenigen, der in der Tat Lichtstrahlen in den Fahrgastraum eintreten lässt und der demzufolge nicht einem beliebigen Karosserieteil oder einem beliebigen Element der Innenausstattung gegenüberliegend angeordnet ist.

Bei dieser besonderen Ausführungsform, die lediglich als Beispiel gewählt wurde, ist die Verdunkelungsvorrichtung 1 tatsächlich mit den beiden Vorhängen mit Aufrollvorrichtung 2, 3 versehen, deren jeweilige Aufrollrohre 30, 40 beiderseits des abzudunkelnden Bereiches angeordnet sind und deren jeweilige Zugstangen 50, 60 für das Gleiten längs der genannten Führungsschienen 70 beweglich montiert sind und deren jeweilige Leitwände 10, 20 gegenläufig ausgefahren werden können.

Diese Ausgestaltung bietet mehrere Vorteile. Sie bietet zunächst die Möglichkeit, eine Art Lichtfenster zu realisieren, dessen Positionierung längs der Führungsschienen 70 justierbar und deren Länge als Funktion des Grades des Ausfahrens jeder Leinwand 10, 20 variabel wäre. Eine solche Ausgestaltung gestattet auch, die Position der unerlässlichen Bedienungsgriffe insbesondere dann zu verändern, wenn die Glasscheibe vollständig abgedunkelt ist, um den verschiedenen Insassen des Kraftfahrzeuges den Zugriff zu erleichtern.

Unabhängig davon wird im Einzelnen jeder Vorhang mit Aufrollvorrichtung 2, 3 in an sich bekannter Weise aus einer Leinwand 10, 20 gebildet, deren beide entgegengesetzten Enden jeweils einerseits mit einem von dem abzudunkelnden Bereich beabstandet angeordneten, für die Axialrotation beweglich montierten Aufrollrohr 30, 40 und andererseits mit einer Zugstange 50, 60, deren Enden 51, 61 jeweils für das Gleiten längs der beiden beiderseits des abzudunkelnden Bereiches angeordneten Führungsschienen 70 beweglich montiert sind.

Um parallel zur Innenfläche der Glasscheibe ausgefahren werden zu können, ist jede Leinwand 10, 20 für die Verschiebung zwischen einer Aufnahmeposition, in der sie auf ein Aufrollrohr 30, 40 aufgerollt wird, und einer ausgefahrenen Position, in der sie sich unterhalb des abzudunkelnden Bereiches erstreckt, beweglich montiert.

In auf dem Gebiet von Vorhängen mit Aufrollvorrichtung 3, 4 mit manueller Betätigung an sich bekannter Weise ist im Übrigen jedes Aufrollrohr 30, 40 mit einem elastischen Rückholmittel gekoppelt, das in der Lage ist, es für die Axialrotation in Aufrollrichtung der Leinwand 10, 20, an der das Aufrollrohr 30, 40 fest verbunden ist, mitzunehmen. Die beiden elastischen Rückholmittel wurden aus offensichtlichen Gründen der Übersichtlichkeit nicht dargestellt, jedes von ihnen wird jedoch hier in an sich bekannter Weise durch eine Spiralfeder gebildet, deren eines Ende unbeweglich ist und deren anderes Ende mit dem entsprechenden beweglichen Aufrollrohr 30, 40 fest verbunden ist.

Entsprechend dem Gegenstand der vorliegenden Erfindung weist jedes Ende 51, 61 jeder Zugstange 50, 60 eine Reibkufe 52, 62 auf, die in der Lage ist, sich gegen eine Reibungsfläche 71 der entsprechend Führungsschiene 70 abzustützen. Außerdem ist jede Zugstange 50, 60 für die Axialrotation relativ zu den Führungsschienen 70 zwischen einer Verriegelungsposition, bei der jede ihrer Reibkufen 52, 62 sich gegen die mit ihr verbundene Reibungsfläche 71 abstützt, und einer Verschiebeposition, bei der jede ihrer Reibkufen 52, 62 von der mit ihr verbundenen Reibungsfläche 71 beabstandet positioniert ist, beweglich montiert. Des Weiteren weist jedes Ende 51, 61 jeder Zugstange 50, 60 ein elastisches Rückholmittel 53, 63 auf, das in der Lage ist, die genannte Zugstange 50, 60 für die Axialrotation bis zur Verriegelungsposition mitzunehmen. Schließlich ist das Ganze so ausgestaltet, dass das Anlegen der Reibkufen 52, 62 jeder Zugstange 50, 60 an die damit verbundenen Reibungsflächen 71 geeignet ist, die Gleitbeweglichkeit der genannten Zugstange 50, 60 längs der Führungsschienen 70 zu blockieren.

Bei dieser derzeit bevorzugten Ausführungsform der Erfindung ist jede Reibkufe 52, 62 in exzentrischer Weise relativ zur Rotationsachse 54, 64 der entsprechenden Zugstange 50, 60 positioniert. Im Übrigen weist jede Führungsschiene 70 eine Abstützfläche 72 auf, die sich im Wesentlichen gegenüber der Reibungsfläche 71 erstreckt. Darüber hinaus ist jedes elastische Rückholmittel 53, 63 in der Lage, eine Schubkraft auf einen Teil der Abstützfläche 72 auszuüben, der sich im Wesentlichen gegenüber dem Teil der Reibungsfläche 71 erstreckt, gegen den sich die entsprechende Reibkufe 52, 62 abstützen soll.

Das Ganze ist in der Weise ausgestaltet, dass jede so erzeugte Schubkraft in der Lage ist, die entsprechende Zugstange 50, 60 solange in Axialrichtung drehen zu lassen, bis die betreffende Reibkufe 52, 62 gegen die mit ihr verbundene Reibungsfläche 71 gedrückt wird, und anschließend die genannte Reibkufe 52, 62 an der genannten Reibungsfläche 71 abgestützt zu halten, womit entsprechend die Blockierung der genannten Zugstange 50, 60 längs der Führungsschienen 70 erreicht wird.

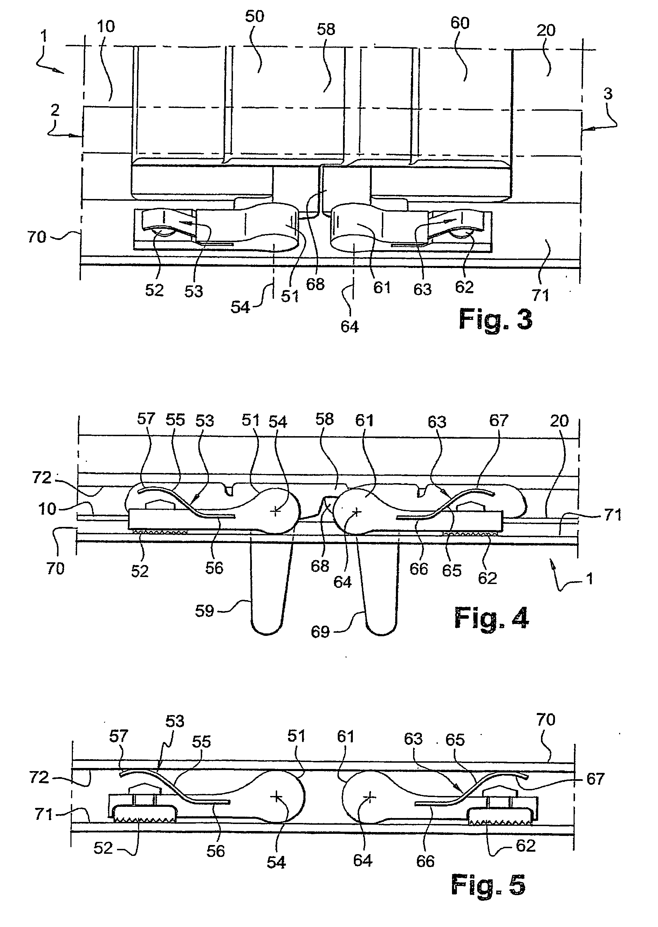

Wie insbesondere in den Figuren 4 und 5 zu sehen ist, wird bei diesem besonderen Ausführungsbeispiel jedes elastische Rückholmittel 53, 63 durch eine Blattfeder gebildet, deren Körper 55, 65 elastisch verformbar ist und deren eines Ende 56, 66 fest mit der Zugstange 50, 60 verbunden ist und deren freies Ende 57, 67 in der Lage ist, längs der Abstützfläche 72 der entsprechenden Führungsschiene 70 zu gleiten.

Nach einer Besonderheit der Erfindung sind die Reibkufen 52, 62 jeder Zugstange 50, 60 jeweils relativ zur Ausfahrrichtung der damit verbundenen Leinwand 10, 20 hinter der Rotationsachse 54, 64 der genannten Zugstange 50, 60 positioniert.

Diese Eigenschaft ermöglicht es, den distalsten Teil jedes Vorhangs mit Aufrollvorrichtung 2, 3 nicht unnötig sperrig zu gestalten, um nicht eine eventuelle Verbindung der entsprechenden Zugstange 50, 60 mit einer festen Kante oder mit einer anderen Zugstange 50, 60 eines zweiten Vorhangs mit Aufrollvorrichtung 2, 3 wie im vorliegenden Fall zu behindern.

In besonders vorteilhafter Weise wird hier jede Reibkufe 62, 63 aus Elastomer, im vorliegenden Fall aus EPDM, ausgeführt.

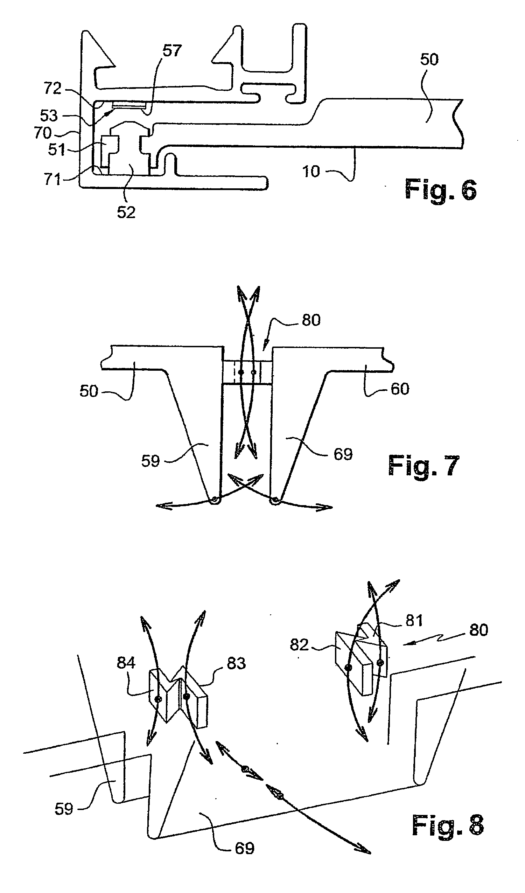

Nach einer aus den Figuren 7 und 8 ersichtlichen Besonderheit ist die Verdunkelungsvorrichtung 1 des Weiteren mit Kopplungsmitteln 80 versehen, welche in der Lage sind, die beiden Zugstangen 50, 60 in trennbarer Weise fest miteinander zu verbinden.

Dieses Merkmal ermöglicht es, wenn die Vorhänge mit Aufrollvorrichtung 2, 3 vollständig ausgefahren sind, zwischen den Zugstangen 50, 60 eine reversible Verbindung zu schaffen, die geeignet ist, die Schrumpfungsphänomene der entsprechenden Leinwand 10, 20 zu vermeiden.

Bei dieser Ausführungsform weisen die Kopplungsmittel 80 zwei Paare von Verbindungselementen 81, 82; 83, 84 auf. Das Ganze ist in der Weise ausgestaltet, dass die Verbindungselemente 81, 82; 83, 84 ein- und desselben Paars jeweils mit den beiden Zugstangen 50, 60 fest verbunden sind und so, dass sie außerdem in der Lage sind, in einer im Wesentlichen zur Ausfahrebene der entsprechenden Leinwand 10, 20 senkrechten Richtung ineinander zu greifen.

Es ist anzumerken, dass der Begriff Ausfahrebene ganz allgemein die Mittelebene bezeichnet, auf der sich jede Leinwand 10, 20 erstrecken soll, d.h. also unabhängig von eventuellen Krümmungen in Längsrichtung und/oder in Querrichtung, die sie aufweisen kann und die im Allgemeinen recht wenig ausgeprägt sind.

Wie in den Figuren 7 und 8 zu sehen ist, stellt sich jedes Verbindungselement 81, 82; 83, 84 hier in Form eines Hakens dar, der sich horizontal erstreckt und dessen Körper senkrecht zur Ausfahrebene der Leinwand 20 ausgerichtet ist. Es wäre jedoch durchaus denkbar, eine Ausführungsvariante mit Verbindungselementen 81, 82, 83, 84 zu wählen, deren Körper parallel zur Ausfahrebene angeordnet wären.

Nach einer weiteren Besonderheit dieser besonderen Ausführungsform, die insbesondere aus den Figuren 3 und 4 ersichtlich ist, weisen die Zugstangen 50, 60 in Längsrichtung seitliche Teile 58, 68 auf, die in der Lage sind, übereinander in einer Ebene zum Liegen zu kommen, die sich im Wesentlichen parallel zur Ausfahrebene der entsprechenden Leinwand 10, 20 erstreckt, wenn die genannten Zugstangen 50, 60 miteinander gekoppelt sind.

Die so erzeugte Überdeckung ermöglicht die Homogenität der Verdunkelungsfunktion für den Fall, dass die Verbindung zwischen den Zugstangen 50, 60 nicht absolut vollständig wäre, um zu vermeiden, dass ein auch noch so geringfügiger Zwischeriraum Licht durchtreten lässt.

Nach einer weiteren Besonderheit der Erfindung ist jede Zugstange 50, 60 mit einem überstehenden Betätigungsgriff 59, 69 versehen, der einen Hebel bildet, der sich in einer zur Ausfahrebene der dazugehörigen Leinwand 10, 20 im Wesentlichen senkrechten Richtung erstreckt.

Die Tatsache, dass jeder Betätigungsgriff 59, 69 überstehend ist, erweist sich als besonders vorteilhaft, um eine Hebelwirkung zu erzeugen, welche geeignet ist, eine mühelose axiale Rotation der entsprechenden Zugstange 50, 60 zu erzeugen.

Natürlich betrifft die Erfindung auch ganz allgemein ein Kraftfahrzeug, das mit mindestens einer Verdunkelungsvorrichtung wie vorstehend beschrieben ausgestattet ist.

## Patentansprüche

1. Verdunketungsvorrichtung (1), welche eine Leinwand (10,20) aufweist, deren beide entgegengesetzten Enden jeweils einerseits mit einem von einem abzudunkelnden Bereich beabstandet angeordneten, für die Axialrotation beweglich montierten Aufrollrohr (30,40) und andererseits mit einer Zugstange (50,60), deren Enden für das Gleiten jeweils längs der beiden beiderseits des abzudunkelnden Bereiches angeordneten Führungsschienen (70) beweglich montiert sind, fest verbunden sind, wobei das Aufrollrohr (30,40) mit einem elastischen Rückholmittel gekoppelt ist, das es in der Axialrotation in Aufrollriditung der Leinwand (10,20), mit der es fest verbunden ist, mitnimmt, wobei jedes Ende (51,61) der Zugstange (50,60) eine Reibkufe (52, 62) aufweist die geeignet ist, sich gegen eine Reibungsfläche (71) der entsprechenden Führungsschiene (70) abzustützen, **dadurch gekennzeichnet, dass** die Zugstange (50,60) für die Axialrotation relativ zu den Führungsschienen zwischen einer Verriegelungsposition, bei der jede ihrer Reibkufen (52,62) sich gegen die mit ihr verbundene Reibungsfläche (71) abstützt, und einer Verschiebeposition, bei der jede ihrer Reibkufen (52, 62) von der Reibungsfläche (71) beabstandet positioniert ist, die mit ihr verbunden ist, beweglich montiert ist, und dadurch, dass jedes Ende (51,61) der Zugstange (50,60) außerdem ein elastisches Rückholmittel (53, 63) aufweist, das in der Lage ist, sie in der Axialrotation bis zur Verriegelungsposition mitzunehmen, wobei das Abstützen der Reibkufen (52,62) der Zugstange (50,60) an den damit verbundenen Reibungsflächen die Gleitbeweglichkeit der Zugstange (50,60) längs der Führungsschienen (70) zu blockieren vermag.

2. Verdunkelungsvorrichtung (1) nach Anspruch 1, **dadurch gekennzeichnet, dass** jede Reibkufe (52, 62) in exzentrischer Weise relativ zur Rotationsachse (54, 64) der entsprechenden Zugstange 50, 60 positioniert ist, dadurch, dass jede Führungsschiene (70) eine Abstützfläche (72) aufweist, die sich im Wesentlichen gegenüber der Reibungsfläche (71) erstreckt, und dadurch, dass jedes elastische Rückholmittel (53, 63) in der Lage ist, eine Schubkraft auf einen Teil der Abstützfläche (72) auszuüben, der sich im Wesentlichen gegenüber dem Teil der Reibungsfläche (71) erstreckt, gegen den sich die entsprechende Reibkufe (52, 62) abstützen soll.

3. Verdunkelungsvorrichtung (1) nach einem der Ansprüche 1 oder 2, **dadurch gekennzeichnet, dass** jedes elastische Rückholmittel (53, 63) durch eine Blattfeder gebildet wird, deren Körper (55, 65) elastisch verformbar ist und deren eines Ende (56, 66) fest mit der Zugstange (50, 60) verbunden ist und deren freies Ende (57, 67) in der Lage ist, längs der Abstützfläche (72) der entsprechenden Führungsschiene (70) zu gleiten.

4. Verdunkelungsvorrichtung (1) nach einem der Ansprüche 1 bis 3, **dadurch gekennzeichnet, dass** jede Reibkufe (52, 62) relativ zur Ausfahrrichtung der damit verbundenen Leinwand (10, 20) hinter der Rotationsachse (54, 64) der genannten Zugstange (50, 60) positioniert ist.

5. Verdunkelungsvorrichtung (1) nach einem der Ansprüche 1 bis 4, **dadurch gekennzeichnet, dass** jede Reibkufe (52, 62) aus Elastomer ausgeführt wird.

6. Verdunkelungsvorrichtung (1) nach einem der Ansprüche 1 bis 5, **dadurch gekennzeichnet, dass** sie zwei Leinwände (10, 20) aufweist, deren jeweilige Aufrollrohre (30, 40) beiderseits des abzudunkelnden Bereiches positioniert sind und deren jeweilige Zugstangen (50, 60) für das Gleiten längs der genannten Führungsschienen (70) beweglich montiert sind, wobei die genannten Leinwände (10, 20) gegenläufig ausgefahren werden können.

7. Verdunkelungsvorrichtung (1) nach Anspruch 6, **dadurch gekennzeichnet, dass** sie mit Kopplungsmitteln (80) versehen ist, welche in der Lage sind, die beiden Zugstangen (50, 60) in trennbarer Weise fest miteinander zu verbinden.

8. Verdunkelungsvorrichtung (1) nach Anspruch 7, **dadurch gekennzeichnet, dass** die Kopplungsmittel (80) mindestens ein Paar Verbindungselemente (81, 82; 83, 84) aufweisen, welche jeweils mit den beiden Zugstangen (50, 60) fest verbunden sind und in der Lage sind, in einer im Wesentlichen zur Ausfahrebene der entsprechenden Leinwände (10, 20) senkrechten Richtung ineinander zu greifen.

9. Verdunkelungsvorrichtung (1) nach einem der Ansprüche 6 bis 8, **dadurch gekennzeichnet, dass** die Zugstangen (50, 60) in Längsrichtung seitliche Teile (58, 68) aufweisen, die in der Lage sind, übereinander in einer Ebene zum Liegen zu kommen, die sich im Wesentlichen parallel zur Ausfahrebene der entsprechenden Leinwände (10, 20) erstreckt, wenn die genannten Zugstangen (50, 60) miteinander gekoppelt sind.

10. Verdunkelungsvorrichtung (1) nach einem der Ansprüche 1 bis 9, **dadurch gekennzeichnet, dass** jede Zugstange (50, 60) mit einem überstehenden Betätigungsgriff (59, 69) versehen ist, der einen Hebel bildet, der sich in einer zur Ausfahrebene der dazugehörigen Leinwand (10, 20) im Wesentlichen senkrechten Richtung erstreckt.

11. Kraftfahrzeug, **dadurch gekennzeichnet, dass** es mindestens eine Verdunkelungsvorrichtung (1) nach den vorstehend beschriebenen Patentansprüchen aufweist.

## Claims

1. Shading means (1) which has a screen (10, 20), of which the two opposite ends are each fixed, on the one hand, to a rolling-up tube (30, 40), which is spaced apart from a region which is to be shaded and is mounted in a movable manner for axial rotation, and, on the other hand, to a pull rod (50, 60), of which the ends are mounted in a movable manner for sliding in each case along the two guide rails (70) arranged on either side of the region which is to be shaded, wherein the rolling-up tube (30, 40) is coupled to an elastic restoring means, which carries it along in axial rotation in the rolling-up direction of the screen (10, 20) to which it is fixed, wherein each end (51, 61) of the pull rod (50, 60) has a frictional runner (52, 62), which is suitable for being supported against a frictional surface (71) of the corresponding guide rail (70), **characterized in that** the pull rod (50, 60) is mounted in a movable manner, for axial rotation relative to the guide rails, between a locking position, in which each of its frictional runners (52, 62) is supported against the frictional surface (71) connected to it, and a displacement position, in which each of its frictional runners (52, 62) is spaced apart from the frictional surface (71) connected to it, and **in that** each end (51, 61) of the pull rod (50, 60), in addition, has an elastic restoring means (53, 63), which is capable of carrying the pull rod along in axial rotation as far as the locking position, wherein the action of the frictional runners (52, 62) of the pull rod (50, 60) being supported on the frictional surfaces connected thereto is able to block the ability of the pull rod (50, 60) to slide along the guide rails (70).

2. Shading means (1) according to Claim 1, **characterized in that** each frictional runner (52, 62) is positioned in an eccentric manner relative to the axis of rotation (54, 64) of the corresponding pull rod (50, 60), **in that** each guide rail (70) has a supporting surface (72), which extends essentially opposite the frictional surface (71), and **in that** each elastic restoring means (53, 63) is capable of exerting a pushing force on a part of the supporting surface (72) which extends essentially opposite that part of the frictional surface (71) against which the corresponding frictional runner (52, 62) should be supported.

3. Shading means (1) according to either of Claims 1 and 2, **characterized in that** each elastic restoring means (53, 63) is formed by a leaf spring, of which the body (55, 65) is elastically deformable and of which the one end (56, 66) is fixed to the pull rod (50, 60) and the free end (57, 67) is capable of sliding along the supporting surface (72) of the corresponding guide rail (70).

4. Shading means (1) according to one of Claims 1 to 3, **characterized in that** each frictional runner (52, 62) is positioned behind the axis of rotation (54, 64) of the aforementioned pull rod (50, 60), as seen in relation to the pulling-out direction of the connected screen (10, 20).

5. Shading means (1) according to one of Claims 1 to 4, **characterized in that** each frictional runner (52, 62) is made of elastomer.

6. Shading means (1) according to one of Claims 1 to 5, **characterized in that** it has two screens (10, 20), of which the respective rolling-up tubes (30, 40) are positioned on either side of the region which is to be shaded and of which the respective pull rods (50, 60) are mounted in a movable manner for sliding along the aforementioned guide rails (70), wherein the aforementioned screens (10, 20) can be pulled out in opposite directions.

7. Shading means (1) according to Claim 6, **characterized in that** it is provided with coupling means (80), which are capable of fixing the two pull rods (50, 60) to one another in a separable manner.

8. Shading means (1) according to Claim 7, **characterized in that** the coupling means (80) have at least one pair of connecting elements (81, 82; 83, 84) which are each fixed to the two pull rods (50, 60) and are capable of engaging one inside the other in a direction essentially perpendicular to the pulling-out plane of the corresponding screens (10, 20).

9. Shading means (1) according to one of Claims 6 to 8, **characterized in that** the pull rods (50, 60) have lateral parts (58, 68), as seen in the longitudinal direction, which are capable of ending up located one above the other in a plane which extends essentially parallel to the pulling-out plane of the corresponding screens (10, 20) when the aforementioned pull rods (50, 60) are coupled to one another.

10. Shading means (1) according to one of Claims 1 to 9, **characterized in that** each pull rod (50, 60) is provided with a protruding actuating grip (59, 69), which forms a lever which extends in a direction essentially perpendicular to the pulling-out plane of the associated screen (10, 20).

11. Motor vehicle, **characterized in that** it has at least one shading means (1) according to the patent claims described above.

## Revendications

1. Dispositif d'occultation (1), présentant une toile (10, 20) dont les deux extrémités opposées sont à chaque fois connectées fixement d'une part à un tube d'enroulement (30, 40) monté de manière déplaçable pour une rotation axiale et disposé à distance d'une zone à occulter, et d'autre part à une tige de traction (50, 60), dont les extrémités sont montées de manière déplaçable pour le glissement à chaque fois le long des deux rails de guidage (70) disposés de chaque côté de la zone à occulter, le tube d'enroulement (30, 40) étant accouplé à un moyen de rappel élastique qu'il entraîne en rotation axiale dans la direction d'enroulement de la toile (10, 20) avec laquelle il est connecté fixement, chaque extrémité (51, 61) de la tige de traction (50, 60) présentant un patin de friction (52, 62) qui est prévu pour s'appuyer contre une surface de friction (71) du rail de guidage correspondant (70), **caractérisé en ce que** la tige de traction (50, 60) est montée de manière déplaçable pour la rotation axiale par rapport aux rails de guidage entre une position de verrouillage dans laquelle chacun de ses patins de friction (52, 62) s'appuie contre la surface de friction (71) qui lui est connectée et une position de déplacement dans laquelle chacun de ses patins de friction (52, 62) est positionné à distance de la surface de friction (71) qui lui est connectée, et **en ce que** chaque extrémité (51, 61) de la tige de traction (50, 60) présente en outre un moyen de rappel élastique (53, 63) qui est en mesure de l'entraîner en rotation axiale jusqu'à la position de verrouillage, l'appui des patins de friction (52, 62) de la tige de traction (50, 60) sur les surfaces de friction connectées à ceux-ci permettant de bloquer la mobilité en glissement de la tige de traction (50, 60) le long des rails de guidage (70).

2. Dispositif d'occultation (1) selon la revendication 1, **caractérisé en ce que** chaque patin de friction (52, 62) est positionné de manière excentrée par rapport à l'axe de rotation (54, 64) de la tige de traction correspondante (50, 60), par le fait que chaque rail de guidage (70) présente une surface d'appui (72) qui s'étend essentiellement en regard de la surface de friction (71), et par le fait que chaque moyen de rappel élastique (53, 63) est en mesure d'exercer une force de poussée sur une partie de la surface d'appui (72), qui s'étend essentiellement en regard de la partie de la surface de friction (71) contre laquelle doit s'appuyer le patin de friction correspondant (52, 62).

3. Dispositif d'occultation (1) selon l'une quelconque des revendications 1 ou 2, **caractérisé en ce que** chaque moyen de rappel élastique (53, 63) est formé par un ressort à lame, dont le corps (55, 65) peut être déformé élastiquement, et dont une extrémité (56, 66) est connectée fixement à la tige de traction (50, 60) et dont l'extrémité libre (57, 67) est en mesure de glisser le long de la surface d'appui (72) du rail de guidage correspondant (70).

4. Dispositif d'occultation (1) selon l'une quelconque des revendications 1 à 3, **caractérisé en ce que** chaque patin de friction (52, 62) est positionné par rapport à la direction de sortie de la toile qui lui est connectée (10, 20) derrière l'axe de rotation (54, 64) de ladite tige de traction (50, 60).

5. Dispositif d'occultation (1) selon l'une quelconque des revendications 1 à 4, **caractérisé en ce que** chaque patin de friction (52, 62) est réalisé en élastomère.

6. Dispositif d'occultation (1) selon l'une quelconque des revendications 1 à 5, **caractérisé en ce qu'**il présente deux toiles (10, 20) dont les tubes d'enroulement respectifs (30, 40) sont positionnés de chaque côté de la zone à occulter et dont les tiges de traction respectives (50, 60) sont montées de manière déplaçable pour le glissement le long desdits rails de guidage (70), lesdites toiles (10, 20) pouvant être sorties en sens inverse.

7. Dispositif d'occultation (1) selon la revendication 6, **caractérisé en ce qu'**il est pourvu de moyens d'accouplement (80) qui sont en mesure de relier fixement l'une à l'autre de manière séparable les deux tiges de traction (50, 60).

8. Dispositif d'occultation (1) selon la revendication 7, **caractérisé en ce que** les moyens d'accouplement (80) présentent au moins une paire d'éléments de connexion (81, 82 ; 83, 84), qui sont connectés fixement à chaque fois aux deux tiges de traction (50, 60), et qui sont en mesure de venir en prise l'un dans l'autre dans une direction essentiellement perpendiculaire au plan de sortie des toiles correspondantes (10, 20).

9. Dispositif d'occultation (1) selon l'une quelconque des revendications 6 à 8, **caractérisé en ce que** les tiges de traction (50, 60) présentent des parties latérales (58, 68) dans la direction longitudinale, qui sont en mesure de venir se placer les unes sur les autres dans un plan qui s'étend essentiellement parallèlement au plan de sortie des toiles correspondantes (10, 20), lorsque lesdites tiges de traction (50, 60) sont accouplées l'une à l'autre.

10. Dispositif d'occultation (1) selon l'une quelconque des revendications 1 à 9, **caractérisé en ce que** chaque tige de traction (50, 60) est pourvue d'une prise d'actionnement saillante (59, 69) qui forme un levier qui s'étend dans une direction essentiellement perpendiculaire au plan de sortie de la toile associée (10, 20).

11. Véhicule automobile, **caractérisé en ce qu'**il présente au moins un dispositif d'occultation (1) selon les revendications décrites ci-dessus.
